# EUROPÄISCHE PATENTSCHRIFT

(11) **EP 3 296 795 B1**
(45) Veröffentlichungstag und Bekanntmachung des Hinweises auf die Patenterteilung: **27.01.2021**
(21) Anmeldenummer: 17187538.8
(22) Anmeldetag: 23.08.2017
(51) Int. Cl.: G02B 27/01, G02B 30/22

(54) **VERFAHREN ZUR DARSTELLUNG EINES BILDOBJEKTS IN EINEM FAHRZEUG AUF EINER FAHRZEUGINTERN UND EINER FAHRZEUGEXTERN WAHRGENOMMENEN ANZEIGE**
METHOD FOR DISPLAYING AN IMAGE OBJECT IN A VEHICLE ON A DISPLAY SEEN INSIDE AND OUTSIDE THE VEHICLE
PROCÉDÉ D'AFFICHAGE D'UN OBJET IMAGE DANS UN VÉHICULE SUR DES AFFICHAGES PERÇUS INTÉRIEUR ET EXTÉRIEUR DU VÉHICULE

(30) Priorität: 20.09.2016 DE 102016218006
(43) Veröffentlichungstag der Anmeldung: 21.03.2018
(73) Patentinhaber: VOLKSWAGEN AKTIENGESELLSCHAFT, 38440 Wolfsburg (DE)
(72) Erfinder: Temming, Carsten, 38106 Braunschweig (DE); Tümler, Johannes, 39167 Wellen (DE); Rhede, Johannes, 10115 Berlin (DE); Wittkämper, Michael, 38106 Braunschweig (DE)

(56) Entgegenhaltungen:
- EP-A1- 2 018 992
- WO-A1-2015/037325
- WO-A2-2014/170274
- DE-A1-102005 010 843
- DE-A1-102013 019 144
- GB-A- 2 517 793
- DAVID L PAGE ET AL: "Vergence and Accommodation in Simulation and Training with 3D Displays", CONFERENCE: INTERSERVICE/INDUSTRY TRAINING, SIMULATION, AND EDUCATION CONFERENCE (I/ITSEC) 2014, 1 January 2014 (2014-01-01), XP055662827, DOI: 10.13140/2.1.1145.0240

## Beschreibung

### Gebiet der Erfindung

Die vorliegende Erfindung betrifft ein Verfahren zur Darstellung eines Bildobjekts in einem Fahrzeug auf einer fahrzeugintern und einer fahrzeugextern wahrgenommenen Anzeige, ein Steuergerät zur Durchführung des Verfahrens und eine entsprechende Anordnung.

### Hintergrund der Erfindung

In der Fahrzeugtechnik ist mittlerweile die Verwendung von Flachbildschirmen bzw. Displays weit verbreitet. So werden auf den Multifunktionsdisplays volldigitaler Kombiinstrumente diverse fahrzeugrelevante Informationen wie die Geschwindigkeit, Drehzahl, verbleibender Tankinhalt, Kilometerstände, Warnhinweise bei Fehlfunktionen aber beispielsweise auch Bildinhalte für ein Navigations-, Assistenz- oder Infotainment-System wiedergegeben. Hierbei kommen verschiedene Displaytechnologien, wie zum Beispiel TFT-, LCD- und AMOLED-Displays, zum Einsatz.

Es ist davon auszugehen, dass zukünftig auch 3D-Displays, wie beispielsweise autostereoskopische Displays, vermehrt verwendet werden, da durch die dann wahrgenommene Tiefe des Bildes visuelle Informationen im Raum verteilt dargestellt werden können. Bei autostereoskopischen Displays werden zur Erzeugung eines dreidimensionalen Eindrucks mindestens zwei Bilder gleichzeitig dargestellt, wobei mittels Linsenraster oder Parallaxbarrieren das Licht einzelner Pixel in verschiedene Richtungen vor dem Bildschirm abgelenkt bzw. absorbiert wird und die beiden Augen jeweils ein anderes Bild erreicht. Ebenso können zur Erzeugung eines Tiefeneindrucks andere Displaytypen eingesetzt werden, wie beispielsweise Multi-Layer-Displays, bei denen mehrere Displayebenen übereinander angeordnet sind, oder Lichtfelddisplays, bei denen ein Mikrolinsenraster genutzt wird um ein Bild in einzelne Lichtstrahlen aufzuteilen und auf unterschiedliche Tiefen fokussieren zu können.

Der Einsatz eines autostereoskopischen Displays für eine dreidimensionale Darstellung einer Kraftfahrzeug-Instrumententafel wird in der GB 2517793 A beschrieben, wobei eine Priorisierung der dargestellten Information in der Form erfolgt, dass für den Fahrer wichtige Informationen im Vordergrund und für den Fahrer nicht so wichtige Funktionen im Hintergrund dargestellt werden. Ebenso beschreibt die EP 2 896 531 A2 die Verwendung eines autostereoskopischen Displays in einem Fahrzeug, bei dem die Anzeige von Instrumenten und Navigationsinformationen so erfolgt, dass sie in unterschiedlichen Tiefen wahrgenommen werden Weiterer relevanter Stand der Technik ist in der DE 102005010843 und der WO 2015/037325 zu finden.

Während der Fahrt ist die Menge der für den Fahrer aufnehmbaren Informationen begrenzt, da sich dieser auf die Fahraufgabe konzentrieren muss. Daher muss eine Ablenkung durch das Ablesen von Anzeigen und Systemnachrichten und das Suchen nach Funktionen und Bedienelementen auf den verschiedenen Displays so gering wie möglich gehalten werden. Die visuelle Ablenkung ist hierbei umso größer, umso weiter das jeweilige Display von der Sichtlinie des Fahrers auf die vor ihm liegende Straße entfernt ist. So erfordern sogenannte Head-Down-Displays, wie beispielsweise das Kombiinstrument, eine Blickabwendung von der Straße. Zusätzlich müssen die Augen sich dann auf eine kürzere Sehentfernung einstellen. Diese als Akkommodation und Vergenz bezeichneten Prozesse erfordern Zeit und ermüden die Augenmuskulatur, wenn sie häufig stattfinden.

Um die Blickzuwendungszeit zu dem jeweiligen Display bzw. die Blickabwendung von der Straße zu minimieren, werden vermehrt Head-up-Displays eingesetzt. Bei Head-up-Displays werden die darzustellenden Bildinhalte auf die Windschutzscheibe oder auf eine separate, davor angebrachte Scheibe, beispielsweise eine transparente Kunststoffscheibe, projiziert. Dies ermöglicht dem Fahrer bei der Fahrt seine Kopfhaltung bzw. Blickrichtung beizubehalten und sowohl die projizierten Informationen als auch die vor ihm liegende Straße gleichzeitig zu sehen. Es entsteht hierbei der Eindruck, als ob sich in einigen Metern Entfernung vor der Motorhaube eine Anzeige befände.

Eine Vielzahl von Bauformen und Weiterentwicklungen für Head-up-Displays sind aus dem Stand der Technik bekannt. So zeigt die DE 1020112214903 A1 ein Verfahren zum Betreiben eines Head-up-Displays für ein Fahrzeug, bei dem ein grafisches Element mit einem direkten Bezug zu der realen Umgebung des Fahrzeugs dargestellt wird. Aus der DE 102013218085 A1 ist ein Head-up-Display mit einem 3D-Display als Bilderzeugungseinrichtung bekannt. Ferner offenbart die DE 102014219575 A1 ein Head-up-Display, bei dem Grafikelemente dreidimensional in die Nähe von oder um jeweilige Objekte innerhalb der Umgebung des Fahrzeugs herum projiziert werden.

Weiterhin ist es bekannt, besonders relevante Informationen und Bildinhalte zusätzlich zu der Anzeige im Kombiinstrument auch auf einem Head-up-Display wiederzugeben.

### Zusammenfassung der Erfindung

Es ist eine Aufgabe der Erfindung, eine Möglichkeit für die Darstellung von Bildobjekten in einem Fahrzeug auf einer fahrzeugextern wahrgenommenen Anzeige und einer fahrzeugintern wahrgenommenen Anzeige zur Verfügung zu stellen, welche die Zusammenhänge dargestellter Anzeigeinhalte für den Nutzer besser verständlich macht.

Diese Aufgabe wird durch ein Verfahren mit den Merkmalen des Anspruchs 1, ein Steuergerät zur Durchführung des Verfahrens gemäß Anspruch 10 sowie durch eine entsprechende Anordnung gemäß Anspruch 11 gelöst. Bevorzugte Ausgestaltungen der Erfindung sind Gegenstand der abhängigen Ansprüche.

Die Erfindung beruht auf der Erkenntnis, dass fahrzeugextern wahrgenommene Anzeigen bisher aufgrund der räumlichen Distanz von ihrer projizierten Bildebene zu den fahrzeugintern wahrgenommenen Anzeigen als eigenständig betrachtet werden. Die Anzeigen werden nicht als zusammengehörig angesehen obwohl ein Bedarf am Austausch von innerhalb und außerhalb des Fahrzeugs wahrgenommenen Bildobjekten besteht.

Das erfindungsgemäße Verfahren zur Darstellung eines Bildobjekts in einem Fahrzeug auf einer fahrzeugintern und einer fahrzeugextern wahrgenommenen Anzeige zeichnet sich dadurch aus, dass ein Übergang des Bildobjekts zwischen der fahrzeugintern wahrgenommenen Anzeige und der fahrzeugextern wahrgenommenen Anzeige erfolgt, wobei eine Darstellung des Bildobjekts in mehreren räumlichen Tiefenebenen, die unterschiedlich weit vom Fahrer entfernt erscheinen, möglich ist und die räumliche Tiefenebene, in der die Darstellung des Bildobjekts erfolgt, während des Übergangs in Richtung des Übergangs verschoben wird.

Dieses hat den Vorteil, dass die Aufmerksamkeit des Nutzers beim Übergang von Bildobjekten zwischen den Anzeigen geführt wird und damit die Wiedererkennbarkeit der Bildobjekte auf den Anzeigen gewährleistet wird.

Gemäß einer Ausführungsform der Erfindung erfolgt die fahrzeugextern wahrgenommene Anzeige mittels eines Head-up-Displays. Die fahrzeugintern wahrgenommene Anzeige erfolgt gemäß einer Ausführungsform der Erfindung auf dem Kombiinstrument. Dieses ermöglicht einen besonders vorteilhaften Austausch von innerhalb und außerhalb des Fahrzeugs wahrgenommenen Bildinhalten. So können beispielsweise Navigationsmanöver von dem Kombiinstrument auf das Head-up-Display wandern und kontaktanalog auf die Straße gelegt werden.

Besonders vorteilhaft ist hierbei, wenn die fahrzeugintern wahrgenommene Anzeige mittels eines 3D-Displays erfolgt, das eine räumliche Wahrnehmung des Bildobjektes in unterschiedlicher Tiefe innerhalb des räumlichen Wiedergabebereichs eines 3D-Displays ermöglicht.

Gemäß einer vorteilhaften Weiterbildung dieser Ausführungsform der Erfindung wird das Bildobjekt bei einem Übergang vom 3D-Display auf die fahrzeugextern wahrgenommene Anzeige vor dem Übergang zunächst auf dem 3D-Display kleiner werdend und sich vom Fahrer weg bewegend dargestellt oder bei einem Übergang von der fahrzeugextern wahrgenommene Anzeige auf das 3D-Display nach dem Übergang auf dem 3D-Display größer werdend und sich auf den Fahrer hin bewegend dargestellt.

Gemäß einer weiteren Ausführungsform erfolgt die fahrzeugextern wahrgenommene Anzeige mittels eines Head-Up-Displays, das eine räumliche Wahrnehmung des Bildobjektes in unterschiedlicher Tiefe innerhalb eines räumlichen Wiedergabebereichs des Head-Up-Displays ermöglicht.

Vorteilhafterweise wird das Bildobjekt so dargestellt, dass es unmittelbar vor dem Übergang in der gleichen Tiefenebene wie unmittelbar nach dem Übergang erscheint.

Eine weitere Ausführungsform der Erfindung sieht vor, dass das Bildobjekt zunächst auf einer ersten fahrzeugintern wahrgenommenen Anzeige dargestellt wird, dass die Darstellung des Bildobjekts dann von der ersten fahrzeugintern wahrgenommenen Anzeige auf eine zweite fahrzeugintern wahrgenommenen Anzeige verschoben wird und dann ein Übergang des Bildobjekts von der fahrzeugintern wahrgenommenen Anzeige auf die fahrzeugextern wahrgenommenen Anzeige erfolgt.

Eine weitere Ausführungsform der Erfindung sieht vor, dass ein displayübergreifender Rahmen projiziert wird, innerhalb dem das Bildobjekt während des Übergangs zwischen der fahrzeugintern wahrgenommenen Anzeige und der fahrzeugextern wahrgenommenen Anzeige dargestellt wird.

Gemäß einer Ausführungsform der Erfindung wird das erfindungsgemäße Verfahren durch ein Steuergerät durchgeführt.

Eine erfindungsgemäße Anordnung zur Darstellung eines Bildobjekts in einem Fahrzeug weist eine erste Anzeigevorrichtung zur Erzeugung einer fahrzeugintern wahrgenommenen Anzeige und eine zweite Anzeigevorrichtung zur Erzeugung einer fahrzeugextern wahrgenommenen Anzeige, eine Bildausgabeeinheit, die den Anzeigevorrichtungen die darzustellenden Bildinhalte zuführt und eine Steuereinheit zur Ansteuerung der Bildausgabeeinheit auf und zeichnet sich dadurch aus, dass mindestens eine der Anzeigevorrichtungen eine räumlich wahrgenommene Anzeige des Bildobjektes in unterschiedlichen räumlichen Tiefenebenen ermöglicht und die Steuereinheit die Bildausgabeeinheit so ansteuert, dass ein Übergang des Bildobjekts zwischen der fahrzeugintern wahrgenommenen Anzeige und der fahrzeugextern wahrgenommenen Anzeige erfolgt, wobei eine Darstellung des Bildobjekts in mehreren räumlichen Tiefenebenen, die unterschiedlich weit vom Fahrer entfernt erscheinen, möglich ist und die räumliche Tiefenebene, in der die Darstellung des Bildobjekts erfolgt, während des Übergangs in Richtung des Übergangs verschoben wird.

Schließlich umfasst die Erfindung auch ein Kraftfahrzeug, das eingerichtet ist, das erfindungsgemäße Verfahren auszuführen oder ein erfindungsgemäßes Steuergerät bzw. eine erfindungsgemäße Anordnung aufweist.

Weitere Merkmale der vorliegenden Erfindung werden aus der nachfolgenden Beschreibung und den Ansprüchen in Verbindung mit den Figuren ersichtlich.

### Kurze Beschreibung der Figuren

In den Figuren zeigen:
- Fig. 1: schematisch das erfindungsgemäße Verfahren mit dem Übergang eines Bildobjekts zwischen einer fahrzeuginternen und einer fahrzeugextern wahrgenommenen Anzeigevorrichtung;
- Fig. 2: schematisch eine Draufsicht für den Übergang eines Bildobjektes von einem fahrzeuginternen 3D-Display auf ein Head-up-Display;
- Fig. 3: schematisch in mehreren Teilschritten den Übergang eines Bildobjektes von einem fahrzeuginternen 3D-Display auf ein Head-up-Display aus Fahrersicht;
- Fig. 4: schematisch den Übergang eines Bildobjektes von einem ersten fahrzeuginternen 2D-Display über ein zweites fahrzeuginternes 3D-Display auf ein fahrzeugexternes Display;
- Fig. 5: ein Blockschaltbild für eine Anordnung zur Durchführung des erfindungsgemäßen Verfahrens.

### Detaillierte Beschreibung der Ausführungsformen

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

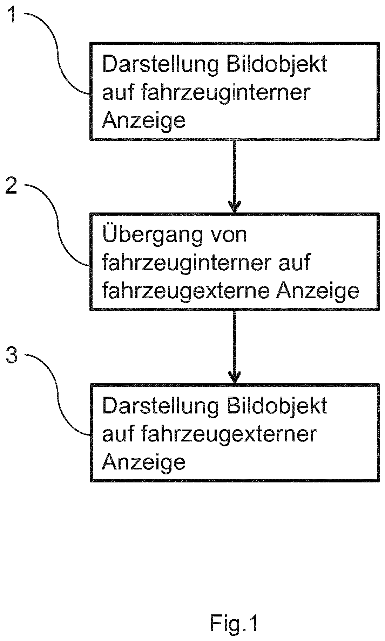

Figur 1 zeigt schematisch das erfindungsgemäße Verfahren mit dem Übergang eines Bildobjekts zwischen einer fahrzeuginternen und einer fahrzeugextern wahrgenommenen Anzeigevorrichtung.

Gemäß Verfahrensschritt 1 erfolgt zunächst eine Darstellung von einem Bildobjekt auf einer ersten Anzeigevorrichtung, die innerhalb eines Fahrzeugs angeordnet ist und eine Anzeige generiert, die vom Fahrer als im Fahrzeug befindlich wahrgenommen wird. Es kann sich hierbei um ein 2D-Display oder ein 3D-Display handeln. Die Anzeige erfolgt in einer Tiefenebene, die bei einem 2D-Display der Oberfläche dieses Displays entspricht. Bei einem 3D-Display erfolgt die Anzeige in dem 3D-Darstellung-Bereich, der durch das 3D-Display abgedeckt wird und eine räumliche Wahrnehmung sowohl vor als auch hinter der Oberfläche des 3D-Displays ermöglichen kann, vorzugsweise erfolgt die Anzeige aber anfangs in der Nullebene des 3D-Displays. Bei der ersten Anzeigevorrichtung kann es sich insbesondere um das hinter dem Lenkrad angeordnete Kombiinstrument handeln. Im Verfahrensschritt 2 erfolgt nun ein Übergang des Bildobjekts von der fahrzeugintern wahrgenommenen Anzeige auf eine fahrzeugextern wahrgenommene Anzeige, die durch eine zweite Anzeigevorrichtung erzeugt wird. Bei der zweiten Anzeigevorrichtung kann es sich insbesondere um ein Head-up-Display handeln, welches zwar ebenfalls im Fahrzeug angeordnet ist, aber eine Anzeige generiert, die vom Fahrer als außerhalb des Fahrzeug befindlich wahrgenommen wird. Die zweite Anzeigevorrichtung hat typischerweise nur eine Tiefenebene, es kann sich aber auch um ein Display handeln, das eine räumliche Wahrnehmung des Bildobjektes in unterschiedlicher Tiefe innerhalb eines räumlichen Wiedergabebereichs des Displays ermöglicht. Gemäß Verfahrensschritt 3 erfolgt die Anzeige des Bildobjekts auf der fahrzeugextern wahrgenommenen Anzeige. Entsprechend kann auch der Übergang eines Bildobjekts von einer fahrzeugextern wahrgenommenen Anzeige auf eine fahrzeuginterne Anzeige gestaltet werden, in diesem Fall kehrt sich im Vergleich zu der Darstellung in Figur 1 der durch die Pfeile symbolisierte Verfahrensablauf um.

Der Übergang des Bildobjekts kann automatisch erfolgen. Es ist aber auch denkbar, dass das Bildobjekt von dem Nutzer manuell von einem Display auf das andere Display verschoben wird, beispielsweise wenn eines der Displays für eine Anzeige von anderen Bildinhalten benötigt wird oder für die Darstellung des Bildobjekts besser geeignet ist. In diesem Fall kann die Verschiebung des Bildobjekts durch den Nutzer auf verschiedene Weisen initiiert werden, beispielsweise manuell durch das Drücken von Bedientasten an einem Multifunktionslenkrad, durch eine Gestensteuerung oder eine Spracheingabe, und kann dann eine Animation für den Übergang auslösen.

Bei dem Bildobjekt kann es sich sowohl um eine rein passive Wiedergabe von Informationen als auch um grafisch dargestellte Bedienelemente handeln, die beispielsweise bei einer fahrzeuginternen Anzeige auf einem in der Mittelkonsole angeordneten Touchscreen-Display mit einem Finger die Bedienung bzw. Steuerung eines technischen Geräts im Fahrzeug ermöglichen.

Statt einem Bildobjekt können ebenso mehrere Bildobjekte von einem auf das andere Display übergehen. Ebenso können zusätzlich zu dem übergehenden Bildobjekt auf einem oder beiden der Displays noch weitere Bildinformationen und/oder Bedienelemente dargestellt werden, die auf dem jeweiligen Display verankert sind und nicht auf das andere Display übergehen.

Auch wenn gemäß der obigen Beschreibung des Verfahrens die erste Anzeigevorrichtung eine Anzeige generiert, die vom Fahrer als im Fahrzeug befindlich wahrgenommen wird, so kann bei der Verwendung eines 3D-Displays, beispielsweise für das Kombiinstrument, auch eine Darstellung eines Bildobjekts erfolgen, die vom Fahrer als außerhalb des Fahrzeug befindlich wahrgenommen wird. Bei einer Darstellung mehrerer Bildobjekte kann die Darstellung auch so erfolgen, dass ein Teil der Bildobjekte innerhalb des Fahrzeugs und ein weiterer Teil außerhalb des Fahrzeugs wahrgenommen wird.

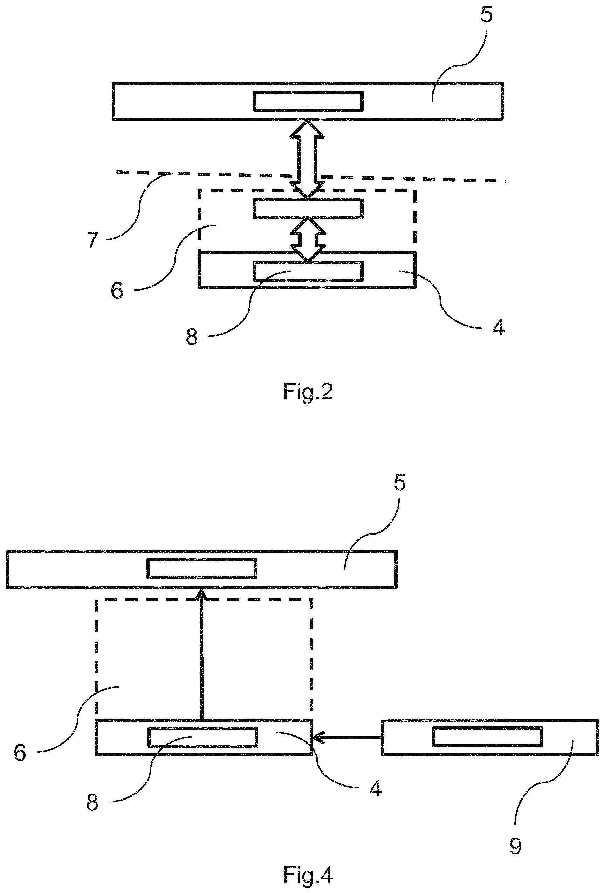

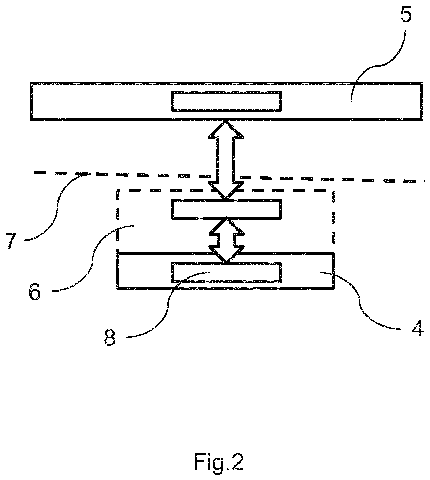

Figur 2 zeigt schematisch für eine Ausführungsform der Erfindung den Übergang eines Bildobjektes 8 zwischen einem Head-up-Display 5 und einem als 3D-Display, beispielsweise als autostereoskopisches Display, ausgestalteten frei programmierbaren Kombiinstrument 4 mit einem hinter der Displayoberfläche liegenden räumlichen Wiedergabebereich 6. Die Wiedergabebereiche der beiden Displays sind hierbei von oben dargestellt, wobei die Anzeige des Head-up-Displays 5 fahrzeugextern wahrgenommen wird. Die gestrichelte Linie 7 trennt hierbei den Bereich interner Anzeigen bzw. intern wahrgenommener Anzeigen von dem Bereich extern wahrgenommener Anzeigen.

Das Bildobjekt 8 wird zunächst auf dem Kombiinstrument 4 dargestellt und durchläuft dann die durch die Pfeile symbolisierte Trajektorie in Richtung des Head-up-Displays 5. So wird das Bildobjekt zunächst im räumlichen Wiedergabebereich 6 des Kombiinstruments 4 nacheinander in hintereinander liegenden Tiefenebenen und schließlich auf dem Head-up-Display 5 dargestellt, sodass es sich in Richtung des Head-up-Displays 5 zu bewegen und auf dieses überzugehen scheint. Ebenso kann das Bildobjekt 8 zunächst auf dem Head-up-Display 5 dargestellt werden und sich dann in umgekehrter Richtung auf den Fahrer zu bewegen und schließlich auf dem Kombiinstrument 4 dargestellt werden.

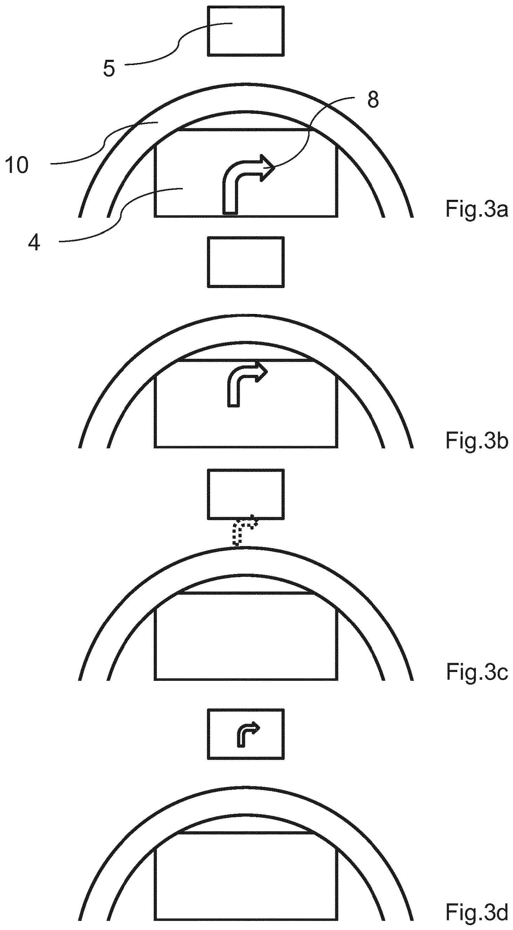

Dieses ist mehr im Detail in Figur 3 für das Beispiel eines Navigationspfeils als übergehendes Bildobjekt 8 gezeigt. Anfangs liegt der Navigationspfeil noch in der Nullebene des Kombiinstruments 4 (Teilfigur 3a). Im Anschluss wird der Navigationspfeil dann auf dem 3D-Display in einer Tiefenebene angezeigt die hinter der Nullebene liegt (Teilfigur 3b) und erweckt damit den Anschein, dass er sich in Richtung des Head-up-Display 5 bewegt. Wenn der Navigationspfeil sich weiter in Richtung des Head-up-Display 5 bewegt, verlässt er den Anzeigebereich des Kombiinstruments und kann zeitweise aufgrund der virtuellen Position zwischen dem Kombiinstrument und dem Head-up-Display auf keinem der beiden Displays mehr abgedeckt werden (Teilfigur 3c). Durch den vorherigen Tiefeneindruck ist aber für den Fahrer eine Abschätzung möglich, wo sich der Navigationspfeil im Verlauf der Animation befinden würde. Schließlich kommt der Navigationspfeil auf dem Anzeigebereich des Head-up-Displays an und wird so dargestellt dass er in einiger Entfernung vor dem Fahrzeug, in 14 m Entfernung, erscheint (Teilfigur 3d).

Der Navigationspfeil kann hierbei separat oder auch integriert in eine Navigationskarte dargestellt werden. Ebenso ist es denkbar den Navigationspfeil auf dem Kombiinstrument in einer Navigationskarte zu integrieren, bei der Darstellung im Head-up-Display dann aber den Navigationspfeil kontaktanalog auf der Straße zu gestalten.

Um den Übergang zwischen dem Kombiinstrument und dem Head-up-Display für den Fahrer noch besser nachvollziehbar zu machen, kann das Bildobjekt so dargestellt werden als wenn es sich auf speziellen Trajektorien bewegen würde, beispielsweise entlang einer virtuellen Straße, die im Kombiinstrument beginnt und im Head-up-Display endet. Ebenso ist es auch möglich die verschiedenen Darstellungen entlang nicht geradliniger Trajektorien im Raum anzuzeigen, beispielsweise entlang einer "Rampe", welche das Bildobjekt in die Höhe "katapultiert". Ferner kann beispielsweise mit im Armaturenbrett eingelassenen LEDs ein displayübergreifender Rahmen projiziert werden, innerhalb dem das Bildobjekt während des Übergangs dargestellt wird.

Um den räumlichen Eindruck bei dem Übergang des Bildobjekts zu verstärken, erfolgt die Darstellung des Bildobjekt in den verschiedenen Tiefenebenen so, dass das Bildobjekt ausgehend von der Maximalgröße bei der Darstellung in der Nullebene des Kombiinstruments zunehmend kleiner werdend dargestellt wird, bis es das Head-up-Display erreicht hat. Die Verkleinerung des dargestellten Bildobjekts kann hierbei antiproportional zum wahrgenommenen Abstand des Bildobjekts erfolgen, aber auch anders gestaltet werden, beispielsweise kann die Größe des Bildobjekts beim Verschieben nach hinten zunehmen, sodass seine wahrgenommene Größe der Anzeige auf dem Kombiinstrument weniger schnell abnimmt.

Wie in Figur 4 dargestellt, kann das Bildobjekt 8 auch zunächst auf einer ersten Anzeigevorrichtung 9 mit fahrzeugintern wahrgenommener Anzeige wiedergegeben werden, die seitlich vom Head-up-Display, beispielsweise im Bereich der Mittelkonsole, angeordnet ist. Ein unmittelbarer Übergang von dieser seitlich angeordneten Anzeige in das Head-up-Display kann je nach Anordnung der Anzeige für den Fahrer nicht leicht nachvollziehbar sein. In diesem Fall wird die Darstellung des Bildobjekts von der ersten Anzeigevorrichtung 9 zunächst auf eine zweite Anzeigevorrichtung 4 mit fahrzeugintern wahrgenommener Anzeige, beispielsweise das Kombiinstrument, verschoben. Im Anschluss erfolgt dann ein Übergang des Bildobjekts von dieser zweiten Anzeigevorrichtung 4 auf die Anzeigevorrichtung 5 mit fahrzeugextern wahrgenommenen Anzeige.

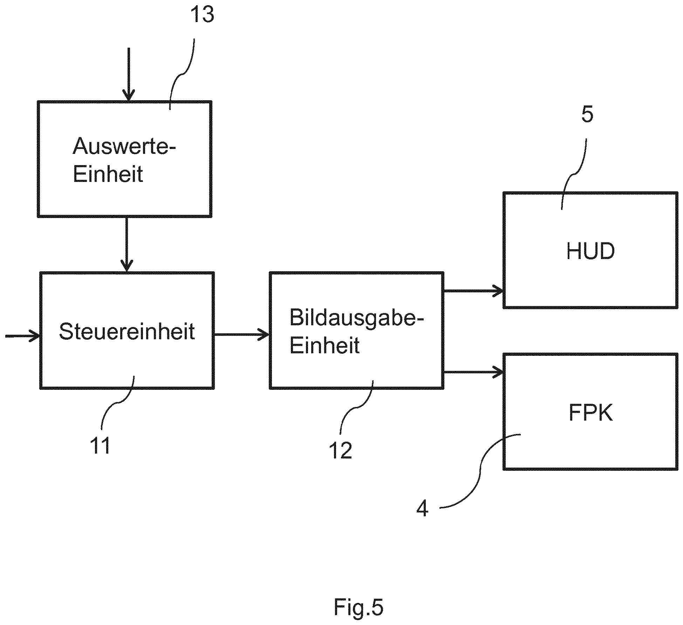

Figur 5 zeigt eine Ausführungsform einer Anordnung zur Durchführung des erfindungsgemäßen Verfahrens. Eine Steuereinheit 11 führt einer Bildausgabeeinheit 12 ein Steuersignal zu, um diese zu veranlassen, dem Kombiinstrument 4 bzw. dem Head-up-Display 5 Bildinhalte zuzuführen. Je nach Rechenleistung der Bildausgabeeinheit 12 können hierbei abgespeicherte fertige Grafiken oder aber auch in Echtzeit berechnete Animationen angezeigt werden, beispielsweise wenn in der Bildausgabeeinheit 12 eine leistungsstarke Grafikkarte integriert ist.

Auf den Displays können fahrzeugrelevante Informationen wie die Geschwindigkeit, Drehzahl, verbleibender Tankinhalt, Warnhinweise bei Fehlfunktionen aber beispielsweise auch Bildinhalte für ein Navigationssystem, Assistenzsystem oder eine Infotainment-Einrichtung wiedergegeben werden.

Das Kombiinstrument 4 kann als 2D-Display oder als 3D-Display, beispielsweise als autostereoskopisches Display, ausgestaltet sein.

Das Head-up-Display 5 umfasst eine nicht dargestellte Bilderzeugungseinheit, die beispielsweise mittels eines TFT-Farbdisplays oder einer DMD- (Digital-Micromirror-Device-) Einheit das abzubilden Bild erzeugt. Ferner umfasst es eine ebenfalls nicht dargestellte optische Projektionseinheit die beispielsweise mittels eines Hohlspiegels oder mehreren Hohlspiegeln auf der gewölbten Windschutzscheibe ein verzerrungsfreies Bild abbildet. Grundsätzlich ist der Abstand zwischen dem virtuellen Bild, welches auf dem Head-up-Display angezeigt wird, und dem Betrachter des virtuellen Bilds fest. Es ist aber auch möglich, den Bildabstand durch eine Anpassung der Projektionsoptik zu verändern und so bei einem Übergang zwischen dem Kombiinstrument und dem Head-up-Display das übergehende Bildobjekt auf dem Head-up-Display in verschiedenen Tiefenebenen darzustellen. Ebenso kann die Positionierung des virtuellen Bildes in der Höhe reguliert werden. Schließlich kann auch ausgewählt werden, welche Informationen im Head-up-Display eingeblendet werden.

Bei dem Head-up-Display kann es sich auch um ein sogenanntes Augmented Reality Head-up-Display (AR-HUD) handeln, bei der eine Erweiterung der wahrgenommenen realen Straßensituation vor dem Fahrzeug durch das Einblenden bzw. Überlagern mit virtuellen Hinweisen bzw. Objekten erfolgt. Der Bereich vor dem Fahrzeug kann hierbei mit sogenannten kontaktanalogen Informationen so angereichert werden, dass der Fahrer das Gefühl hat, als seien in seine aktuelle Sicht eingeblendeten Hinweisen bzw. Objekten fester Bestandteil der Umwelt. Dadurch erscheint beispielsweise ein Navigationspfeil so, als läge er direkt auf der Straße.

Für solche kontaktanaloge Darstellungen und andere Augmentierungen kann es vorgesehen sein, dass die Steuereinheit 11 auf Basis von Kamera- und Radardaten geeigneter Bordsensoren, Fahrdynamikwerten sowie mit Hilfe von digitalen Kartendaten und GPS-Ortung ein Modell der realen Außenansicht aus der Perspektive des Fahrers generiert.

Zusätzlich kann eine Auswerteeinheit 13 vorgesehen sein, in der Bedieneingaben des Fahrers oder auch Beifahrers ausgewertet werden. So können Objekte in der Fahrzeugumgebung nach ihrer Erkennung im Head-up-Display markiert werden, dann auf eine fahrzeuginterne Anzeige, insbesondere das Kombiinstrument, übergehen und dort mit grafischen Bedienelementen angereichert werden. Auch können eingehende Informationen wie Warnungen, Verkehrshinweise oder E-Mail-Nachrichten zunächst auf dem Head-up-Display angezeigt werden und dann zur weiteren Bearbeitung auf ein fahrzeuginternes Display verlagert werden. Die Bedienung kann dann beispielsweise bei einer Anzeige der grafischen Bedienelemente auf dem Kombiinstrument mittels eines Multifunktion-Lenkrads oder bei einer Anzeige auf einem Display in der Mittelkonsole über eine berührungsempfindliche Oberfläche des Displays erfolgen.

Die Steuereinheit 11 kann aus einem einzelnen elektronischen Steuergerät bestehen, dass üblicherweise einen oder mehrere Eingangs- und Ausgangsstufen, eine Schnittstelle für die Datenkommunikation und einen Mikrocontroller umfasst, der wiederum üblicherweise aus einem Prozessorkern, einem oder mehreren Speicherbausteinen für die Software und einem Arbeitsspeicher besteht. Ebenso kann die Erfindung mittels mehrerer Steuergeräte implementiert werden, die dann über geeignete Schnittstellen kommunizieren.

### Bezugszeichenliste

- 1: Verfahrensschritt mit Darstellung eines Bildobjekts auf einer fahrzeuginternen Anzeige
- 2: Verfahrensschritt mit Übergang eines Bildobjekts von der fahrzeuginternen Anzeige auf eine fahrzeugexterne Anzeige
- 3: Verfahrensschritt mit Darstellung eines Bildobjekts auf einer fahrzeugexternen Anzeige
- 4: Anzeigevorrichtung mit fahrzeugintern wahrgenommener Anzeige
- 5: Anzeigevorrichtung mit fahrzeugextern wahrgenommener Anzeige
- 6: Wiedergabebereich 3D-Display
- 7: Grenze zwischen dem Bereich interner Anzeigen bzw. intern wahrgenommener Anzeigen und dem Bereich extern wahrgenommener Anzeigen
- 8: Bildobjekt
- 9: weitere Anzeigevorrichtung mit fahrzeugintern wahrgenommener Anzeige
- 10: Lenkrad
- 11: Steuereinheit
- 12: Bildausgabe-Einheit
- 13: Auswerte-Einheit

## Patentansprüche

1. Verfahren zur Darstellung (1, 3) eines Bildobjekts (8) in einem Fahrzeug auf einer fahrzeugintern und einer fahrzeugextern wahrgenommenen Anzeige,
**dadurch gekennzeichnet, dass**
ein Übergang (2) des Bildobjekts (8) zwischen der fahrzeugintern wahrgenommenen Anzeige und der fahrzeugextern wahrgenommenen Anzeige in der Weise erfolgt,
dass das Bildobjekt vor dem Übergang nur auf einer der beiden Anzeigen und nach dem Übergang nur auf der anderen der beiden Anzeigen dargestellt wird, wobei mindestens eines der beiden Anzeigen als 3D-Display ausgestaltet ist, das eine räumliche Wahrnehmung des Bildobjektes (8) in unterschiedlicher Tiefe innerhalb eines räumlichen Wiedergabebereichs (6) des 3D-Displays ermöglicht und das Bildobjekt (8) während des Übergangs auf dem 3D-Display nacheinander in hintereinander liegenden räumlichen Tiefenebenen in Richtung der anderen Anzeige dargestellt wird.

2. Verfahren nach Anspruch 1, **dadurch gekennzeichnet, dass** die fahrzeugextern wahrgenommene Anzeige mittels eines Head-up-Displays erfolgt.

3. Verfahren nach Anspruch 2, **dadurch gekennzeichnet, dass** die fahrzeugintern wahrgenommene Anzeige auf dem Kombiinstrument erfolgt.

4. Verfahren nach einem der vorhergehenden Ansprüche, **dadurch gekennzeichnet, dass** die fahrzeugintern wahrgenommene Anzeige mittels eines 3D-Displays erfolgt.

5. Verfahren nach Anspruch 4, **dadurch gekennzeichnet, dass** das Bildobjekt (8) bei einem Übergang vom 3D-Display auf die fahrzeugextern wahrgenommene Anzeige vor dem Übergang zunächst auf dem 3D-Display kleiner werdend und sich vom Fahrer weg bewegend dargestellt wird oder bei einem Übergang von der fahrzeugextern wahrgenommene Anzeige auf das 3D-Display nach dem Übergang auf dem 3D-Display größer werdend und sich auf den Fahrer hin bewegend dargestellt wird.

6. Verfahren nach einem der Ansprüche 2 bis 5, **dadurch gekennzeichnet, dass** die fahrzeugextern wahrgenommene Anzeige mittels eines Head-Up-Displays erfolgt, das eine räumliche Wahrnehmung des Bildobjektes (8) in unterschiedlicher Tiefe innerhalb eines räumlichen Wiedergabebereichs des Head-Up-Displays ermöglicht.

7. Verfahren nach einem der vorhergehenden Ansprüche, **dadurch gekennzeichnet, dass** das Bildobjekt so dargestellt, dass es unmittelbar vor dem Übergang in der gleichen Tiefenebene wie unmittelbar nach dem Übergang erscheint.

8. Verfahren nach einem der vorhergehenden Ansprüche, **dadurch gekennzeichnet, dass** das Bildobjekt zunächst auf einer ersten fahrzeugintern wahrgenommenen Anzeige dargestellt wird, dass die Darstellung des Bildobjekts dann von der ersten fahrzeugintern wahrgenommenen Anzeige auf eine zweite fahrzeugintern wahrgenommenen Anzeige verschoben wird und dann ein Übergang des Bildobjekts von der fahrzeugintern wahrgenommenen Anzeige auf die fahrzeugextern wahrgenommenen Anzeige erfolgt.

9. Verfahren nach einem der vorhergehenden Ansprüche, **dadurch gekennzeichnet, dass** ein displayübergreifender Rahmen projiziert wird, innerhalb dem das Bildobjekt während des Übergangs zwischen der fahrzeugintern wahrgenommenen Anzeige und der fahrzeugextern wahrgenommenen Anzeige dargestellt wird.

10. Steuergerät welches zur Durchführung eines Verfahrens nach einem der vorhergehenden Ansprüche eingerichtet ist.

11. Anordnung zur Darstellung eines Bildobjekts in einem Fahrzeug mit einer ersten Anzeigevorrichtung (4) zur Erzeugung einer fahrzeugintern wahrgenommenen Anzeige und einer zweiten Anzeigevorrichtung (5) zur Erzeugung einer fahrzeugextern wahrgenommenen Anzeige, einer Bildausgabeeinheit (12), die den Anzeigevorrichtungen die darzustellenden Bildinhalte zuführt und einer Steuereinheit (11) zur Ansteuerung der Bildausgabeeinheit (12), **dadurch gekennzeichnet, dass** mindestens eine der Anzeigevorrichtungen (4, 5) als 3D-Display ausgestaltet ist, das zur Erzeugung eines dreidimensionalen Eindrucks eine räumlich wahrgenommene Anzeige des Bildobjektes in unterschiedlichen räumlichen Tiefenebenen ermöglicht und die Steuereinheit (11) die Bildausgabeeinheit (12) so ansteuert, dass ein Übergang des Bildobjekts zwischen der fahrzeugintern wahrgenommenen Anzeige und der fahrzeugextern wahrgenommenen Anzeige in der Weise erfolgt, dass das Bildobjekt vor dem Übergang nur auf einer der beiden Anzeigen und nach dem Übergang nur auf der anderen der beiden Anzeigen dargestellt wird, wobei das Bildobjekt während des Übergangs auf dem 3D-Display nacheinander in hintereinander liegenden räumlichen Tiefenebenen in Richtung der anderen Anzeige dargestellt wird.

12. Kraftfahrzeug, **dadurch gekennzeichnet, dass** es eingerichtet ist, ein Verfahren gemäß einem der Ansprüche 1 bis 9 auszuführen oder ein Steuergerät gemäß Anspruch 10 oder eine Anordnung gemäß Anspruch 11 aufweist.

## Claims

1. Method for representing (1, 3) an image object (8) in a vehicle on a display that is perceived inside the vehicle and outside the vehicle,
**characterized in that**
a transition (2) of the image object (8) between the display that is perceived inside the vehicle and the display that is perceived outside the vehicle is effected in the manner such that the image object is represented before the transition only on one of the two displays and is represented after the transition only on the other one of the two displays, wherein at least one of the two displays is designed as a 3D display allowing a spatial perception of the image object (8) at different depths within a spatial reproduction region (6) of the 3D display, and the image object (8) is represented during the transition on the 3D display successively in spatial depth planes located one behind the other in the direction of the other display.

2. Method according to Claim 1, **characterized in that** the display that is perceived outside the vehicle is effected by means of a head-up display.

3. Method according to Claim 2, **characterized in that** the display that is perceived inside the vehicle is effected on the instrument cluster.

4. Method according to one of the preceding claims, **characterized in that** the display that is perceived inside the vehicle is effected by means of a 3D display.

5. Method according to Claim 4, **characterized in that** in the case of a transition from the 3D display to the display that is perceived outside the vehicle, the image object (8) is represented before the transition initially on the 3D display as becoming smaller and moving away from the driver or, in the case of a transition from the display that is perceived outside the vehicle to the 3D display, is represented after the transition on the 3D display as becoming larger and moving towards the driver.

6. Method according to one of Claims 2 to 5, **characterized in that** the display that is perceived outside the vehicle is effected by means of a head-up display allowing spatial perception of the image object (8) at different depths within a spatial reproduction region of the head-up display.

7. Method according to one of the preceding claims, **characterized in that** the image object is represented such that it appears immediately before the transition in the same depth plane as immediately after the transition.

8. Method according to one of the preceding claims, **characterized in that** the image object is initially represented on a display that is perceived inside the vehicle, **in that** the representation of the image object is then shifted from the first display that is perceived inside the vehicle to a second display that is perceived inside the vehicle, and then a transition of the image object from the display that is perceived inside the vehicle to the display that is perceived outside the vehicle is effected.

9. Method according to one of the preceding claims, **characterized in that** a display-spanning frame is projected within which the image object is represented during the transition between the display that is perceived inside the vehicle and the display that is perceived outside the vehicle.

10. Control device set up for carrying out a method according to one of the preceding claims.

11. Arrangement for representing an image object in a vehicle with a first display apparatus (4) for producing a display that is perceived inside a vehicle and a second display apparatus (5) for producing a display that is perceived outside a vehicle, an image output unit (12) that feeds the image contents to be represented to the display apparatuses, and a control unit (11) for controlling the image output unit (12), **characterized in that** at least one of the display apparatuses (4, 5) is designed as a 3D display allowing a spatially perceived display of the image object at different spatial depth planes to produce a three-dimensional impression and the control unit (11) controls the image output unit (12) such that a transition of the image object between the display that is perceived inside the vehicle and the display that is perceived outside the vehicle is effected in the manner such that the image object is represented before the transition only on one of the two displays and is represented after the transition only on the other one of the two displays, wherein the image object is represented during the transition on the 3D display successively in spatial depth planes located one behind the other in the direction of the other display.

12. Motor vehicle, **characterized in that** it is set up to carry out a method according to one of Claims 1 to 9 or has a control device according to Claim 10 or an arrangement according to Claim 11.

## Revendications

1. Procédé de présentation (1, 3) d'un objet image (8) dans un véhicule sur un affichage visible à l'intérieur du véhicule et un affichage visible à l'extérieur du véhicule,
**caractérisé en ce que**
une transition (2) de l'objet image (8) entre l'affichage visible à l'intérieur du véhicule et l'affichage visible à l'extérieur du véhicule est effectuée de telle sorte que l'objet image n'est présenté que sur l'un des deux affichages avant la transition et uniquement sur l'autre des deux affichages après la transition, l'un au moins des deux affichages étant conçu comme un affichage 3D qui permet une perception spatiale de l'objet image (8) à différentes profondeurs dans une zone de reproduction spatiale (6) de l'affichage 3D et l'objet image (8) étant représenté pendant la transition sur l'affichage 3D successivement dans des plans de profondeur spatiale situés les uns derrière les autres en direction de l'autre affichage.

2. Procédé selon la revendication 1, **caractérisé en ce que** l'affichage visible à l'extérieur du véhicule est effectué au moyen d'un affichage tête haute.

3. Procédé selon la revendication 2, **caractérisé en ce que** l'affichage visible à l'intérieur du véhicule est effectué sur le combiné d'instruments.

4. Procédé selon l'une des revendications précédentes, **caractérisé en ce que** l'affichage visible à l'intérieur du véhicule est effectué au moyen d'un affichage 3D.

5. Procédé selon la revendication 4, **caractérisé en ce que** l'objet image (8) est représenté lors d'une transition de l'affichage 3D à l'affichage visible à l'extérieur du véhicule, en devenant d'abord plus petit sur l'affichage 3D avant la transition et en s'éloignant du conducteur, ou lors d'une transition de l'affichage visible à l'extérieur du véhicule à l'affichage 3D, en devenant plus grand sur l'affichage 3D après la transition et en se rapprochant du conducteur.

6. Procédé selon l'une des revendications 2 à 5, **caractérisé en ce que** l'affichage visible à l'extérieur du véhicule est effectué au moyen d'un affichage tête haute qui permet une perception spatiale de l'objet image (8) à différentes profondeurs dans une zone de reproduction spatiale de l'affichage tête haute.

7. Procédé selon l'une des revendications précédentes, **caractérisé en ce que** l'objet image est présenté de manière à apparaître dans le même plan de profondeur immédiatement avant la transition qu'immédiatement après la transition.

8. Procédé selon l'une des revendications précédentes, **caractérisé en ce que** l'objet image est d'abord présenté sur un premier affichage visible à l'intérieur du véhicule, **en ce que** l'affichage de l'objet image est ensuite déplacé du premier affichage visible à l'intérieur du véhicule à un deuxième affichage visible à l'intérieur du véhicule puis une transition de l'objet image de l'affichage visible à l'intérieur du véhicule à l'affichage visible à l'extérieur du véhicule.

9. Procédé selon l'une des revendications précédentes, **caractérisé en ce qu'**un cadre d'affichage est projeté à l'intérieur duquel l'objet image est présenté pendant la transition entre l'affichage visible à l'intérieur du véhicule et l'affichage visible à l'extérieur du véhicule.

10. Dispositif de commande conçu pour mettre en œuvre un procédé selon l'une des revendications précédentes.

11. Ensemble de présentation d'un objet image dans un véhicule, ledit ensemble comprenant un premier dispositif d'affichage (4) destiné à générer un affichage visible à l'intérieur du véhicule et un deuxième dispositif d'affichage (5) destiné à générer un affichage visible à l'extérieur du véhicule, une unité de sortie d'image (12) qui amène aux dispositifs d'affichage le contenu d'image à présenter et une unité de commande (11) destinée à commander l'unité de sortie d'image (12), **caractérisé en ce qu'**au moins un des dispositifs d'affichage (4, 5) est conçu comme un affichage 3D qui permet un affichage tridimensionnel de l'objet image dans différents plans de profondeur spatiale afin de générer une impression tridimensionnelle et l'unité de commande (11) commande l'unité de sortie d'image (12) de telle sorte qu'une transition de l'objet image entre l'affichage visible à l'intérieur du véhicule et l'affichage visible à l'extérieur du véhicule soit effectuée de telle sorte que l'objet image n'apparaisse que sur l'un des deux affichages avant la transition et ne s'affiche que sur l'autre des deux affichages après la transition, l'objet image étant présenté successivement dans des plans de profondeur spatiale situés les uns derrière les autres en direction de l'autre affichage pendant la transition sur l'affichage 3D.

12. Véhicule automobile, **caractérisé en ce qu'**il est conçu pour mettre en œuvre un procédé selon l'une des revendications 1 à 9 ou comporte un dispositif de commande selon la revendication 10 ou un ensemble selon la revendication 11.
